# EUROPEAN PATENT APPLICATION

(11) **EP 4 606 457 A1**
(43) Date of publication of application: **27.08.2025**
(21) Application number: 22962696.5
(22) Date of filing: 18.10.2022
(51) Int. Cl.: B01D 53/14

(54) **CARBON DIOXIDE ABSORPTION MODULE, CARBON DIOXIDE ABSORPTION TOWER, CARBON DIOXIDE ABSORPTION DEVICE, AND CARBON DIOXIDE ABSORPTION METHOD**

(71) Applicant: SUMITOMO ELECTRIC INDUSTRIES, LTD., Osaka-shi, Osaka 541-0041 (JP)
(72) Inventor: BABA, Masato, Osaka-shi, Osaka 541-0041 (JP); MAEDA, Toru, Osaka-shi, Osaka 541-0041 (JP)
(74) Representative: Boult Wade Tennant LLP
(86) International application number: PCT/JP2022/038780
(87) International publication number: WO 2024/084584

(57) **Abstract**

A carbon dioxide absorption module according to an embodiment of the present disclosure includes a carbon dioxide absorber, a solution that covers the carbon dioxide absorber, and a supply unit that supplies carbon dioxide to the solution.

## Description

### TECHNICAL FIELD

The present disclosure relates to a carbon dioxide absorption module, a carbon dioxide absorption tower, a carbon dioxide absorption device, and a carbon dioxide absorption method.

### BACKGROUND ART

In order to recover carbon dioxide in an industrial facility, a living space or the like, the use of a material capable of absorbing carbon dioxide (hereinafter also referred to as "carbon dioxide absorber") has been studied (see PTL 1).

### CITATION LIST

### PATENT LITERATURE

PTL 1: Japanese Patent Laying-Open No. 2017-109198

### SUMMARY OF INVENTION

A carbon dioxide absorption module according to one aspect of the present disclosure includes a carbon dioxide absorber, a solution that covers the carbon dioxide absorber, and a supply unit that supplies carbon dioxide to the solution.

### BRIEF DESCRIPTION OF DRAWINGS

Fig. 1 is a schematic perspective view illustrating a carbon dioxide absorption module and a carbon dioxide absorption device equipped with the carbon dioxide absorption module according to an embodiment of the present disclosure.
Fig. 2 is a schematic cross-sectional view illustrating the carbon dioxide absorption device of Fig. 1 taken along line II-II.
Fig. 3 is a schematic cross-sectional view illustrating a modification of a support medium in the carbon dioxide absorption module of Fig. 1.
Fig. 4 is a schematic cross-sectional view illustrating a modification of a support medium in the carbon dioxide absorption module of Fig. 1, which is different from the modification of Fig. 3.
Fig. 5 is a schematic view illustrating a carbon dioxide absorption module which is different from that of Fig. 1 and a carbon dioxide absorption tower equipped with the carbon dioxide absorption module according to an embodiment of the present disclosure.
Fig. 6 is a flowchart illustrating a carbon dioxide absorption method according to an embodiment of the present disclosure.

### DETAILED DESCRIPTION

### [Problem to be Solved by the Present Disclosure]

PTL 1 describes a carbon dioxide absorber that absorbs carbon dioxide from a gas which contains moisture and carbon dioxide. PTL 1 describes that a gas which contains moisture and carbon dioxide, and a carbon dioxide absorber are disposed in a sealed container to allow the carbon dioxide absorber to absorb carbon dioxide. However, it is difficult to use the technique described in PTL 1 to fully absorb carbon dioxide when there is a shortage of moisture or the like.

The present disclosure has been made in view of the above-mentioned problem, and an object of the present disclosure is to provide a carbon dioxide absorption module which is excellent in carbon dioxide absorption efficiency.

### [Advantageous Effect of the Present Disclosure]

The carbon dioxide absorption module according to one aspect of the present disclosure is excellent in carbon dioxide absorption efficiency.

### [Description of Embodiments of the Present Disclosure]

First, embodiments of the present disclosure will be described in a list.
(1) A carbon dioxide absorption module according to one aspect of the present disclosure includes a carbon dioxide absorber, a solution that covers the carbon dioxide absorber, and a supply unit that supplies carbon dioxide to the solution.
   In the carbon dioxide absorption module, the carbon dioxide absorber is covered by the solution in which carbon dioxide is dissolved. Thereby, a part of the dissolved carbon dioxide is converted into carbonate ions. Thus, the carbon dioxide absorber can efficiently absorb carbonate ions dissolved in the solution. Therefore, the carbon dioxide absorption module is excellent in carbon dioxide absorption efficiency.
(2) **In** the above (1), the carbon dioxide absorber may be a layered double hydroxide, a basic metal oxide, or a basic metal hydroxide. Since the carbon dioxide absorber is a layered double hydroxide, a basic metal oxide, or a basic metal hydroxide, the carbonate ions in the solution can be more efficiently absorbed.
(3) **In** the above (1) or (2), the carbon dioxide absorption module may further include a dissolution promotion mechanism that promotes dissolution of carbon dioxide into the solution. Since the dissolution promotion mechanism is included, it is easy to increase carbonate ions in the solution. Therefore, it is possible to further improve the carbon dioxide absorption efficiency.
(4) **In** any one of (1) to (3), the solution may contain a dissolution promotor that promotes dissolution of carbon dioxide into the solution. Since the solution contains a dissolution promotor, it is easy to increase an amount of carbon dioxide dissolved in the solution. Therefore, it is possible to further improve the carbon dioxide absorption efficiency.
(5) **In** any one of (1) to (4), a dissolution rate of the carbon dioxide in the solution may be equal to or less than a carbonation rate of the carbon dioxide absorber. When the dissolution rate of carbon dioxide in the solution is equal to or lower than the carbonation rate of the carbon dioxide absorber, carbon dioxide supplied from the supply unit can be more reliably absorbed by the carbon dioxide absorber.
(6) **In** any one of (1) to (5), the carbon dioxide absorber may include a plurality of carbon dioxide absorbers, and an average particle diameter of the plurality of carbon dioxide absorbers may be 5 nm or more and 500 nm or less. When the average particle diameter of the plurality of carbon dioxide absorbers is controlled equal to or greater than the lower limit mentioned above, the contact area between the carbon dioxide absorber and the solution can be increased. When the average particle diameter is controlled equal to or less than the upper limit mentioned above, carbonate ions can efficiently penetrate into the interior of the carbon dioxide absorber crystal. Therefore, it is possible to further improve the carbon dioxide absorption efficiency.
(7) In the above (6), the carbon dioxide absorption module may further include a dispersion mechanism that disperses the plurality of carbon dioxide absorbers in the solution, and the dispersion mechanism may maintain the average particle diameter of the plurality of carbon dioxide absorbers at 5 nm or more and 500 nm or less. Since the dispersion mechanism that disperses the plurality of carbon dioxide absorbers in the solution is included, it is possible to prevent the plurality of carbon dioxide absorbers from aggregating, which makes it possible to efficiently maintain the plurality of carbon dioxide absorbers at an appropriate particle diameter.
(8) In any one of (1) to (7), the pH of the solution may be greater than 6. Since the pH of the solution is greater than the lower limit mentioned above, it is easy to shift the chemical equilibrium in the solution to increase the ratio of carbonate ions. Therefore, it is possible to further improve the carbon dioxide absorption efficiency.
(9) In any one of (1) to (8), the solution may contain a pH buffer. Since the solution contains a pH buffer, it is easy to maintain the ratio of carbonate ions in the solution at a higher ratio. Therefore, it is possible to efficiently maintain the carbon dioxide absorption efficiency.
(10) In any one of (1) to (9), the carbon dioxide absorption module may further include a solution adjustment mechanism that supplies a basic substance to the solution. Since the solution adjustment mechanism is included, it is easy to maintain the ratio of carbonate ions in the solution at a higher ratio. Therefore, it is possible to efficiently maintain the carbon dioxide absorption efficiency.
(11) In any one of the above (1) to (10), the carbon dioxide absorption module may further include a display mechanism that displays a decrease in an activity of the carbon dioxide absorber when the activity thereof decreases. Since the display mechanism that displays a decrease in the activity of the carbon dioxide absorber is included, it is easy to control the environment of the solution so as to maintain the carbon dioxide absorption efficiency.
(12) In any one of (1) to (11), the carbon dioxide absorber may include the plurality of carbon dioxide absorbers, and the carbon dioxide absorption module may further include a spray mechanism that sprays the solution onto the plurality of carbon dioxide absorbers. Since the spray mechanism that sprays the solution onto the plurality of carbon dioxide absorbers is included, the solution can be brought into uniform contact with the plurality of carbon dioxide absorbers. Therefore, it is easy to improve the carbon dioxide absorption efficiency.
(13) In the above (12), the carbon dioxide absorption module may further include a storage unit that stores the plurality of carbon dioxide absorbers. Since the storage unit that stores the plurality of carbon dioxide absorbers is included, it is easy to supply the solution and bring the solution into uniform contact with the plurality of carbon dioxide absorbers stored at predetermined positions.
(14) In any one of (1) to (13), the carbon dioxide absorption module may further include a porous support medium on which the carbon dioxide absorber is disposed. Since the carbon dioxide absorption module includes a porous support medium on which the carbon dioxide absorber is disposed, it is easy to stably support the carbon dioxide absorber.
(15) In the above (14), the support medium may be porous particles, and the porous particle on which the carbon dioxide absorber is disposed may have an average particle diameter of 10 mm or less. When the average particle diameter of the porous particles is controlled equal to or less than the upper limit described above, it is possible to make the entire system uniform, which makes it easy to improve the carbonate ion absorption efficiency of the carbon dioxide absorber. From the viewpoint of efficiently disposing the carbon dioxide absorber on the porous particles, the lower limit of the average particle diameter of the porous particles may be 1.0×10⁻⁵ mm.
(16) In the above (14), the support medium may be a porous yarn or a porous sheet, and the plurality of carbon dioxide absorbers may be disposed on the support medium. Since the support medium is a porous yarn or a porous sheet, and the plurality of carbon dioxide absorbers are disposed on the support medium, carbonate ions can be efficiently and reliably brought into contact with the plurality of carbon dioxide absorbers.
(17) In any of (14) to (16) above, the support medium may include a plurality of support mediums, and the plurality of support mediums may be disposed with an interval from each other. Since the plurality of support mediums are disposed with an interval from each other, the plurality of carbon dioxide absorbers can be easily and stably supported in such a manner that the plurality of carbon dioxide absorbers can be efficiently brought into contact with carbonate ions.
(18) A carbon dioxide absorption tower according to another aspect of the present disclosure includes the carbon dioxide absorption module according to any one of (1) to (17).
   Since the carbon dioxide absorption tower includes the carbon dioxide absorption module, the carbon dioxide absorption tower is excellent in carbon dioxide absorption efficiency.
(19) A carbon dioxide absorption device according to another aspect of the present disclosure includes the carbon dioxide absorption module according to any one of (1) to (17) and a storage tank that stores the solution, and the carbon dioxide absorber is immersed in the solution.
   Since the carbon dioxide absorption device includes the carbon dioxide absorption module and the carbon dioxide absorber is immersed in the solution, the carbon dioxide absorption device is excellent in carbon dioxide absorption efficiency.
(20) A carbon dioxide absorption method according to another aspect of the present disclosure includes bringing carbonate ions into contact with a carbon dioxide absorber covered by a solution.

According to the carbon dioxide absorption method, since the carbon dioxide absorber is covered by the solution, the carbonation of the carbon dioxide absorber is promoted. Therefore, the carbon dioxide absorption method is excellent in carbon dioxide absorption efficiency.

In the present disclosure, the expression that "the solution that covers the carbon dioxide absorber" means that the carbon dioxide absorber is covered by the solution, and is not limited to such a case that the carbon dioxide absorber is constantly covered by the solution. In addition, the carbon dioxide absorber may be partially covered by the solution, and is not limited to such a case that the carbon dioxide absorber is completely covered by the solution. Further, the carbon dioxide absorber may be configured to contact a member such as a cloth or the like that can transfer the solution, and thereby the carbon dioxide absorber may be covered by the solution transferred through the member. The carbon dioxide supplied by the "supply unit" is not limited to the form of a gas, and the carbon dioxide may be dissolved in the solution. In other words, the supply unit may supply carbon dioxide in the form of, for example, carbonate ions. The "particle diameter" means the particle diameter of secondary particles. However, if the particles do not constitute secondary particles, the particle diameter means the particle diameter of primary particles. The "average particle diameter" means a median diameter (D50) which is a value that results in 50% of the volume-based integrated distribution calculated in accordance with JIS-Z-8819-2:2001.

### [Details of Embodiments of the Present Disclosure]

Hereinafter, embodiments of the present disclosure will be described in detail with reference to the drawings as appropriate.

### [First Embodiment]

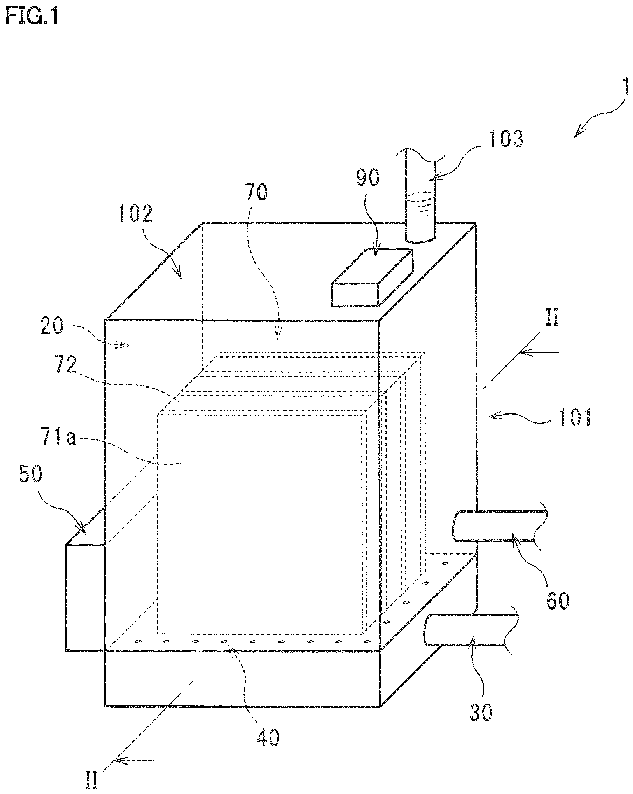

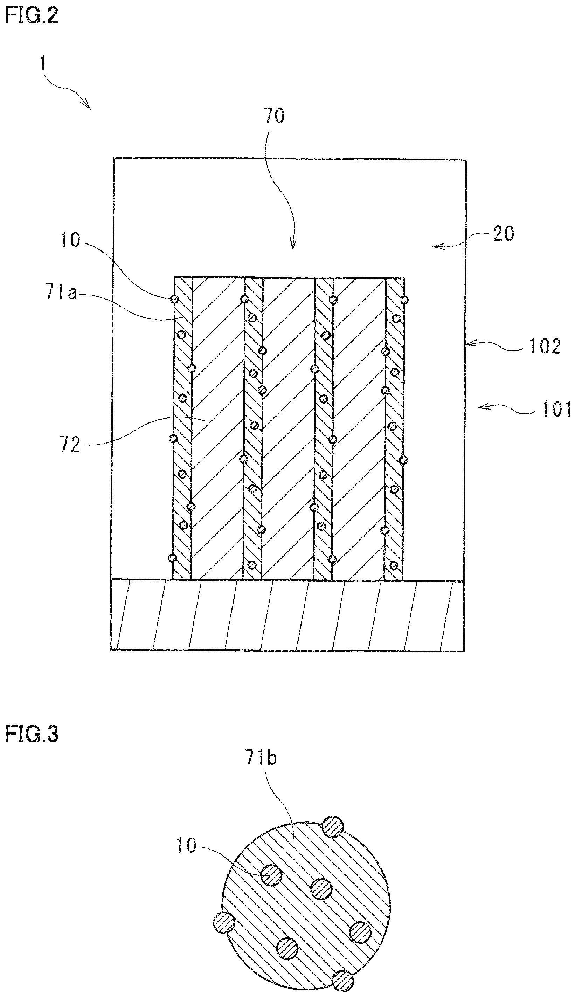

A carbon dioxide absorption module 101 illustrated Figs. 1 and 2 includes a carbon dioxide absorber 10, a solution 20 that covers the carbon dioxide absorber 10, and a supply unit 30 that supplies carbon dioxide to the solution 20. As illustrated in Figs. 1 and 2, the carbon dioxide absorption module 101 is disposed in a carbon dioxide absorption device 1.

In the carbon dioxide absorption module 101, the carbon dioxide absorber 10 is covered by the solution 20 in which carbon dioxide is dissolved. Thereby, a part of the dissolved carbon dioxide is converted into carbonate ions. Thus, the carbon dioxide absorber 10 can efficiently absorb carbonate ions dissolved in the solution 20. Therefore, the carbon dioxide absorption module 101 is excellent in carbon dioxide absorption efficiency.

The carbon dioxide absorption module 101 and the carbon dioxide absorption device 1 are used to absorb or recover carbon dioxide in, for example, a production facility, a living space, an office room or the like. The dimension of the carbon dioxide absorption module 101 and the carbon dioxide absorption device 1 may be appropriately set according to the place of use and the purpose. Hereinafter, the carbon dioxide absorption module 101 and the carbon dioxide absorption device 1 equipped with the carbon dioxide absorption module 101 will be described in detail.

### <Carbon Dioxide Absorption Module>

In the carbon dioxide absorption module 101, the carbon dioxide absorber 10 is covered by the solution 20 in which carbon dioxide is dissolved, and thereby, carbonate ions generated in the solution 20 are absorbed by the carbon dioxide absorber 10. The carbon dioxide absorption module 101 includes a plurality of carbon dioxide absorbers 10. The carbon dioxide absorption module 101 further includes a dissolution promotion mechanism 40 that promotes dissolution of carbon dioxide into the solution 20, a dispersion mechanism 50 that disperses a plurality of carbon dioxide absorbers 10 in the solution 20, a solution adjustment mechanism 60 that supplies a basic substance to the solution 20, a display mechanism 90 that displays a decrease in the activity of the carbon dioxide absorber 10, and a porous support medium 71a on which the carbon dioxide absorber 10 is disposed.

### (Carbon Dioxide Absorber)

The carbon dioxide absorber 10 is in the form of particles, and more specifically, in the form of powders. As the carbon dioxide absorber 10, any material that does not lose chemical reactivity with carbon dioxide (more specifically, carbonate ions) when covered by the solution 20 may be used. Examples of the carbon dioxide absorber 10 include a layered double hydroxide (LDH), a basic metal oxide, and a basic metal hydroxide. Since the carbon dioxide absorber 10 is a layered double hydroxide, a basic metal oxide, or a basic metal hydroxide, it can more efficiently absorb carbonate ions in the solution 20. The carbon dioxide absorption module 101 may include only one of a layered double hydroxide, a basic metal oxide and a basic metal hydroxide or two or more thereof as the carbon dioxide absorber 10.

### [Layered Double Hydroxide]

The layered double hydroxide absorbs carbonate ions and releases carbon dioxide when heated at a relatively low temperature. Therefore, according to the layered double hydroxide, the recycling efficiency of the carbon dioxide absorber 10 can be improved.

The layered double hydroxide may be a compound represented by the following formula (1).

[M1₁₋ₓ²⁺M2ₓ³⁺(OH)₂]^{x+}[A_{x/n}ⁿ⁻.yH₂O]^{x-} · · · (1)

In the above formula (1), M1 is a divalent metal, M2 is a trivalent metal, Aⁿ⁻ is an n-valent anion, x is a number of 0.2 or more and 0.33 or less, and n is an integer of 1 or more. Examples of M1 include Mg, Mn, Ni, and Zn. Examples of M2 include Al, Cr, Fe, and Co. Examples of Aⁿ⁻ include OH⁻, Cl⁻, NO₃⁻, CO₃²⁻, SO₄²⁻, and [Fe(CN)₆]³⁻. The layered double hydroxide can incorporate Aⁿ⁻ and water between basic layers [M1₁₋ₓ²⁺M2ₓ³⁺(OH)₂]^{x+} in the solution 20. The layered double hydroxide may be a Mg-Al system in which M1 is Mg and M2 is Al, a Mg-Fe system in which M1 is Mg and M2 is Fe, a Fe-Fe system in which both M1 and M2 are Fe, or a Zn-Al system in which M1 is Zn and M2 is Al. When the layered double hydroxide is a Mg-Al system, a Mg-Fe system, a Fe-Fe system, or a Zn-Al system, carbonate ions (CO₃²⁻) can be efficiently incorporated as Aⁿ⁻.

### [Basic Metal Oxide]

The basic metal oxide has a larger ratio of carbonate ions absorbed per molar content of metal than the layered double hydroxide. Therefore, the carbon dioxide absorption efficiency can be improved by using the basic metal oxide.

The basic metal oxide may be any compound represented by the chemical formula MO (M is a metal). Examples of M include Ca, Mg, and Ba. The basic metal oxide may be hydrolyzed in the solution 20 to produce a basic metal hydroxide (M(OH)₂), which may further react with carbonate ions (CO₃²⁻) to produce MCO₃. In other words, the basic metal oxide can be easily carbonated by reacting with carbonate ions in the solution 20. The carbonated basic metal oxide can be reused by heating.

### [Basic Metal Hydroxide]

The carbon dioxide absorber 10 may be prepared as a basic metal hydroxide from the beginning. When the basic metal hydroxide is used as the carbon dioxide absorber 10, it is easy to maintain the solution 20 basic. As a result, it is easy to maintain a large ratio of carbonate ions in the solution 20.

A lower limit of the average particle diameter of the plurality of carbon dioxide absorbers 10 may be 5 nm, 10 nm, or 15 nm from the viewpoint of increasing a contact area between the carbon dioxide absorbers 10 and the solution 20. On the other hand, an upper limit of the average particle diameter may be 500 nm, 200 nm, 100 nm, 50 nm, or 30 nm from the viewpoint of facilitating penetration of carbonate ions into the interior of the carbon dioxide absorber 10 crystal. The average particle diameter may be 5 nm or more and 500 nm or less, 10 nm or more and 200 nm or less, 10 nm or more and 100 nm or less, 10 nm or more and 50 nm or less, 10 nm or more and 30 nm or less, or 15 nm or more and 30 nm or less.

### (Support Medium)

A plurality of carbon dioxide absorbers 10 are disposed on the support medium 71a. Since the carbon dioxide absorption module 101 includes the support medium 71a, it can stably support the carbon dioxide absorbers 10. Further, according to this configuration, the carbon dioxide absorbers 10 after absorbing carbon dioxide can be efficiently recovered. Therefore, the carbon dioxide absorbed by the carbon dioxide absorption module 101 can be efficiently used for other purposes and the like.

As illustrated in Figs. 1 and 2, the support medium 71a is a porous sheet. In other words, as illustrated in Figs. 1 and 2, a plurality of carbon dioxide absorbers 10 are disposed on one piece of porous sheet. Since the support medium 71a is a porous sheet, carbonate ions can be efficiently and reliably brought into contact with the carbon dioxide absorbers 10. The plurality of carbon dioxide absorbers 10 are disposed on one piece of porous sheet with an interval from each other. Since the support medium 71a is a porous sheet, the plurality of carbon dioxide absorbers 10 can be efficiently disposed thereon with an interval from each other. As a result, it is possible to prevent the carbon dioxide absorber 10 from agglomerating, which makes it easy to improve carbonate ion absorption efficiency of the carbon dioxide absorber 10.

Examples of the support medium 71a include a cellulose fiber sheet such as a cloth, a nonwoven fabric sheet, a woven fabric sheet, a sponge sheet and Japanese paper; a carbon fiber sheet; a ceramic fiber sheet made of alumina or the like; and a metal fiber sheet made of copper, stainless steel or the like. The support medium 71a may be subjected to a surface treatment such as gold plating or resin coating so as to prevent the support medium from being degraded or eroded by the solution 20 (which will be described later).

The carbon dioxide absorber 10 may be disposed on the surface of the support medium 71a or may be disposed inside the support medium 71a. **In** addition, the support medium 71a may be used as a carrier, and the carbon dioxide absorber 10 may be supported on the surface or holes of the support medium 71a.

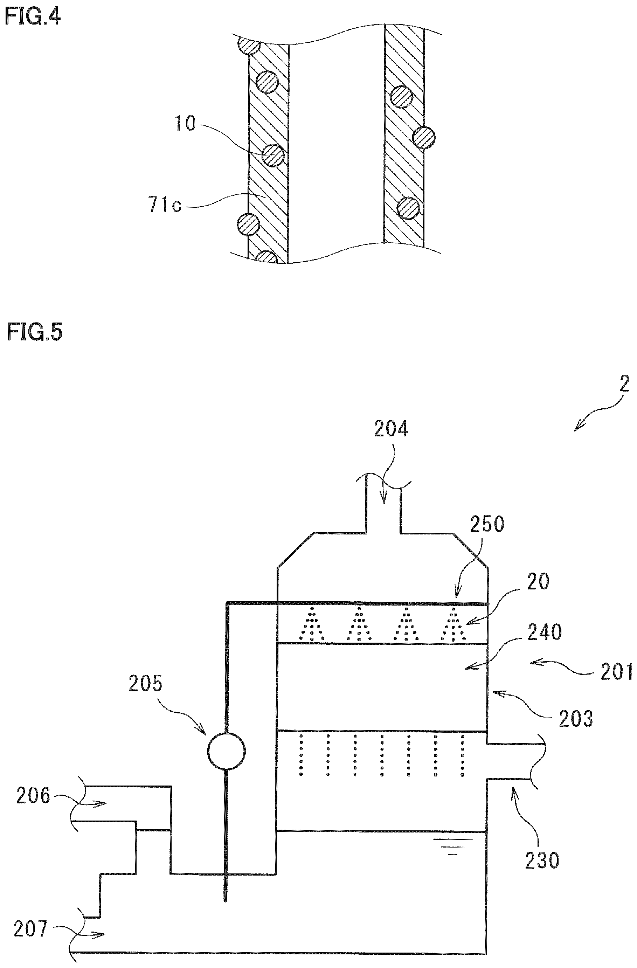

The support medium is not limited to a porous sheet, and may be, for example, a porous particle or a porous yarn. Hereinafter, a configuration in which the carbon dioxide absorber 10 is disposed on the porous particle or the porous yarn will be described with reference to Figs. 3 and 4. Even when the carbon dioxide absorber is disposed on the porous particle or the porous yarn, the carbon dioxide absorber 10 may be disposed on the surface of a support medium 71b or 71c, or may be disposed inside the support medium 71b or 71c. Alternatively, the support medium 71b or 71c may be used as a carrier, and the carbon dioxide absorber may be supported on the surface or holes of the support medium 71b or 71c.

The support medium 71b illustrated in Fig. 3 is a porous particle. As illustrated in Fig. 3, a plurality of carbon dioxide absorbers 10 are disposed on one porous particle. More specifically, a plurality of carbon dioxide absorbers 10 are disposed on one porous particle with an interval from each other. According to this configuration, it is possible to prevent the carbon dioxide absorber 10 from aggregating, which makes it easy to improve the carbonate ion absorption efficiency of the carbon dioxide absorber 10.

Examples of the porous particles include silica gel, water-absorbing polymer, activated carbon particles, porous glass, and porous metal particles. The porous particles may be subjected to a surface treatment such as gold plating or resin coating so as to prevent the support medium from being degraded or eroded by the solution 20 (which will be described later). From the viewpoint of efficiently disposing the carbon dioxide absorber 10, a lower limit of the average particle diameter of the porous particles may be 2 times, 5 times, or 10 times the average particle diameter of the carbon dioxide absorber 10. The lower limit of the average particle diameter of the porous particles may be 1.0×10⁻⁵ mm, 2.5×10⁻⁵ mm, or 5.0×10⁻⁵ mm. From the viewpoint of making the entire system uniform so as to efficiently improve the carbonate ion absorption efficiency of the carbon dioxide absorber 10, an upper limit of the average particle diameter of the porous particles may be 10 mm. The upper limit of the average particle diameter of the porous particles may be 200 times, 100 times, or 50 times the average particle diameter of the carbon dioxide absorber 10. The average particle diameter of the porous particles may be 2 times or more and 200 times or less, 5 times or more and 100 times or less, or 10 times or more and 50 times or less the average particle diameter of the carbon dioxide absorber 10. The average particle diameter of the porous particles may be 1.0×10⁻⁵ mm or more and 10 mm or less, may be 2.5×10⁻⁵ mm or more and 10 mm or less, and may be 5.0×10⁻⁵ mm or more and 10 mm or less.

The support medium 71c illustrated in Fig. 4 is a porous yarn. As illustrated in Fig. 4, a plurality of carbon dioxide absorbers 10 are disposed on one porous yarn. Since the support medium 71c is a porous yarn, carbonate ions can be efficiently and reliably brought into contact with the plurality of carbon dioxide absorbers 10. The plurality of carbon dioxide absorbers 10 are disposed on one porous yarn with an interval from each other. Since the support medium 71c is a porous yarn, the plurality of carbon dioxide absorbers 10 can be efficiently disposed with an interval from each other. As a result, it is possible to prevent the carbon dioxide absorber 10 from aggregating, which makes it easy to improve the carbonate ion absorption efficiency of the carbon dioxide absorber 10.

The porous yarn is not particularly limited as long as it has a large number of pores, and for example, it may be a hollow fiber membrane with a fibrous skeleton.

The lower limit of the average pore diameter of the support medium 71a, 71b or 71c may be equal to 3 times, 5 times, or even 10 times the average particle diameter of the carbon dioxide absorber 10 from the viewpoint of ensuring air permeability or from the viewpoint of easily supporting the carbon dioxide absorber 10. The upper limit of the average pore diameter of the support medium 71a, 71b or 71c is not particularly limited, but may be, for example, 100 times the average particle diameter of the carbon dioxide absorber 10. In the present disclosure, the "average pore diameter" is calculated from a BET specific surface area and a pore volume determined by a gas adsorption method in accordance with JIS-Z-8830-2:2013.

The number of the support mediums in the carbon dioxide absorption module 101 is not particularly limited, and may be one or more. When the carbon dioxide absorption module 101 includes a plurality of support mediums, the support mediums may be any one of the porous sheet, the porous particles, and the porous yarn, or may be a combination of two or more of the porous sheet, the porous particles, and the porous yarn.

When the carbon dioxide absorption module 101 includes a plurality of the support mediums, the plurality of support mediums may be disposed with an interval from each other. According to this configuration, the plurality of carbon dioxide absorbers 10 can be easily and stably supported in such a manner that the plurality of carbon dioxide absorbers can be efficiently brought into contact with carbonate ions.

As illustrated in Figs. 1 and 2, when the plurality of support mediums 71a are disposed with an interval from each other, the support mediums 71a may be disposed with a spacer 72 interposed therebetween. As illustrated in Figs. 1 and 2, a plurality of support mediums 71a are each alternately disposed with a spacer 72 in the thickness direction thereof. More specifically, each of the plurality of support mediums 71a is alternately disposed with the spacer 72 with the sheet surface of each support medium in contact with the spacer 72. The plurality of support mediums 71a may be fixed to the spacers 72. In the carbon dioxide absorption module 101, the plurality of carbon dioxide absorbers 10, the plurality of support mediums 71a, and the plurality of spacers 72 constitute a carbon dioxide absorption unit 70 as a whole.

The spacer 72 has, for example, a plate shape. The spacer 72 is alternately arranged with the support medium 71a with the plate surface thereof in contact with the support medium 71a. The spacer 72 is a porous body. Since the spacer 72 is a porous body, it forms a passage through which carbonate ions reach the carbon dioxide absorber 10. Examples of the spacer 72 include a mesh body and a sponge body. Note that the spacer 72 is not limited to a plate shape, and may be a rod member or the like that contacts only a part of the support medium 71a. Since the carbon dioxide absorption module 101 includes the spacers 72, the plurality of support mediums 71a can be efficiently arranged at a high density with a space interposed therebetween.

### (Supply Unit)

The supply unit 30 supplies a gas that contains carbon dioxide to the solution 20. More specifically, the supply unit 30 supplies carbon dioxide to the solution 20 by supplying a gas that contains carbon dioxide to a storage tank 102 (to be described later) in which the solution 20 is stored. The supply unit 30 includes, for example, a supply pipe configured to supply carbon dioxide into the storage tank 102 from a lower portion of the storage tank 102.

### (Solution)

The solution 20 constantly covers the plurality of carbon dioxide absorbers 10. In the carbon dioxide absorption module 101, the plurality of carbon dioxide absorbers 10 are immersed in the solution 20, and more specifically, the carbon dioxide absorption unit 70 is immersed in the solution 20.

The solution 20 includes water as a solvent. In addition, the solution 20 may include a dissolution promotor that promotes dissolution of carbon dioxide into the solution 20, may include a pH buffer, and may include a salt that exhibits basicity in the solution 20 of the solution 20.

The supply unit 30 supplies a gas that contains carbon dioxide to the solution 20. As a result, a chemical equilibrium represented by the following formulae (2) and (3) occurs in the solution 20, which generates carbonate ions (CO₃²⁻). In the following formulae (2) and (3), "aq" means a hydrated state.

CO₂(aq) = H⁺(aq) + HCO₃⁻(aq) (2)

HCO₃⁻(aq) = H⁺(aq) + CO₃²⁻(aq) (3)

The pH of the solution 20 may be greater than 6. With such a configuration, it is easy to shift the chemical equilibrium in the solution 20 to increase the ratio of carbonate ions (in other words, it is easy to shift the chemical equilibrium of the formula (2) and the chemical equilibrium of the formula (3) toward the right side). As a result, the activity of the carbon dioxide absorber 10 can be increased. Therefore, the carbonate ion absorption efficiency can be further improved. The lower limit of the pH of the solution 20 may be 8 or 10 from the viewpoint of increasing the amount of carbonate ions generated in the solution 20. On the other hand, the upper limit of the pH of the solution 20 is not particularly limited, but may be, for example, 13 from the viewpoint of easily controlling the pH of the solution 20. The pH of the solution 20 may be 6 or more and 13 or less, 8 or more and 13 or less, or 10 or more and 13 or less.

### [Dissolution Promotor]

Examples of the dissolution promotor include carbonic anhydrase. Carbonic anhydrase promotes the generation of hydrogen carbonate ions (HCO₃⁻) in the above formula (2). Since the solution 20 contains a dissolution promotor, it is easy to increase the amount of carbonate ions in the solution 20. Therefore, it is possible to further improve the carbon dioxide absorption efficiency.

### [PH Buffer]

The pH buffer (buffering agent) prevents the pH of the solution 20 from decreasing. Examples of the pH buffer include ammonium chloride, sodium phosphate, and the like. Since the solution 20 includes a pH buffer, it is easy to maintain the ratio of carbonate ions in the solution 20 at a higher ratio. Therefore, it is possible to efficiently maintain the carbon dioxide absorption efficiency.

### [Salt]

Examples of a salt that exhibits basicity in the solution 20, in other words, a salt that exhibits basicity when dissolved in the solution 20 include calcium chloride hydroxide, magnesium chloride hydroxide, poly-ferric chloride, and the like. The basic metal hydroxide (M(OH)₂) described above may be used as the salt. When the solution 20 contains a salt described above, the pH of the solution 20 can be easily increased. As a result, it is easy to shift the chemical equilibrium in the solution 20 to increase the ratio of carbonate ions. When the carbon dioxide absorber 10 is the basic metal oxide described above, it is easy to maintain the carbonate ion absorption activity of the carbon dioxide absorber 10.

### (Dissolution Promotion Mechanism)

As described above, the dissolution promotion mechanism 40 promotes the dissolution of carbon dioxide into the solution 20. Since the carbon dioxide absorption module 101 includes the dissolution promotion mechanism 40, it is easy to increase the amount of carbon dioxide in the solution 20. Therefore, it is possible to further improve the carbon dioxide absorption efficiency.

Examples of the dissolution promotion mechanism 40 include a bubble generator (bubbling device) configured to generate fine bubbles such as nanobubbles and microbubbles in the solution 20, an ultrasonic generator configured to generate cavitation bubbles in the solution 20, and a temperature-pressure control device configured to lower a temperature of the solution 20 and increase the partial pressure of carbon dioxide.

As illustrated in Figs. 1 and 2, the bubble generator described above is provided as the dissolution promotion mechanism 40. The bubble generator is disposed in a flow path of carbon dioxide from the supply unit 30 to the storage tank 102. The bubble generator generates fine bubbles from a gas that contains carbon dioxide and supplies the fine bubbles to the solution 20.

The upper limit of the bubble diameter of the fine bubbles may be 1.0 µm, 0.8 µm, or 0.6 µm from the viewpoint of increasing the contact area between the carbon dioxide and the solution 20 of the carbon dioxide absorption module 101 as a whole. On the other hand, the lower limit of the bubble diameter of the fine bubbles is not particularly limited, but may be, for example, 0.005 µm. The bubble diameter of the fine bubbles may be 0.005 µm or more and 1.0 µm or less, may be 0.005 µm or more and 0.8 µm or less, and may be 0.005 µm or more and 0.6 µm or less. The "bubble diameter" refers to the diameter of fine bubbles when they are discharged from a bubble generator.

The lower limit of the partial pressure of carbon dioxide in the gas supplied from the supply unit 30 into the storage tank 102 may be 4.0×10⁻⁵ MPa, 6.0×10⁻⁵ MPₐ, or 8.0×10⁻⁵ MPa from the viewpoint of improving the carbonate ion absorption efficiency of the carbon dioxide absorber 10. On the other hand, the upper limit of the partial pressure is not particularly limited, but may be, for example, 1.0×10⁻¹ MPa. The partial pressure may be 4.0×10⁻⁵ MPa or more and 1.0×10⁻¹ MPa or less, 6.0×10⁻⁵ MPa or more and 1.0×10⁻¹ MPa or less, or 8.0×10⁻⁵ MPa or more and 1.0×10⁻¹ MPa or less. Therefore, when the dissolution promotion mechanism 40 is a temperature-pressure control device described above, the dissolution promotion mechanism 40 may control the partial pressure of carbon dioxide within the range described above.

When the dissolution promotion mechanism 40 is a temperature-pressure control device described above, the upper limit of the temperature of the solution 20 controlled by the dissolution promotion mechanism 40 may be 10°C or 5°C from the viewpoint of improving the carbonate ion absorption efficiency of the carbon dioxide absorber 10. On the other hand, the lower limit of the temperature may be set within a range in which the solution 20 is not solidified, and may be set to 1°C, for example. The temperature may be set to 1°C or more and 10°C or less, or 1°C or more and 5°C or less.

### (Dispersion Mechanism)

The dispersion mechanism 50 disperses the plurality of carbon dioxide absorbers 10 in the solution 20. The dispersion mechanism 50 maintains an average particle diameter of the plurality of carbon dioxide absorbers 10. The lower limit of the average particle diameter of the plurality of carbon dioxide absorbers 10 maintained by the dispersion mechanism 50 may be 5 nm, 10 nm, or 15 nm. On the other hand, the upper limit of the average particle diameter of the plurality of carbon dioxide absorbers 10 maintained by the dispersion mechanism 50 may be 500 nm, 200 nm, 100 nm, 50 nm, or 30 nm. The average particle diameter may be 5 nm or more and 500 nm or less, 10 nm or more and 200 nm or less, 10 nm or more and 100 nm or less, 10 nm or more and 50 nm or less, 10 nm or more and 30 nm or less, or 15 nm or more and 30 nm or less. Since the carbon dioxide absorption module 101 includes the dispersion mechanism 50, it is possible to prevent the carbon dioxide absorber 10 from aggregating, which makes it possible to efficiently maintain the carbon dioxide absorber 10 at an appropriate particle diameter.

In particular, the dispersion mechanism 50 functions effectively when the plurality of carbon dioxide absorbers 10 are likely to aggregate. For example, when the plurality of carbon dioxide absorbers 10 have not been disposed on the support mediums 71a, 71b and 71c, the carbon dioxide absorbers 10 may temporarily aggregate. In such a case, the plurality of carbon dioxide absorbers 10 are dispersed by the dispersion mechanism 50 while carbon dioxide is being supplied to the solution 20, and thereby it is possible to efficiently maintain the carbon dioxide absorber 10 at an appropriate particle size. In addition, in a case of disposing the carbon dioxide absorbers 10 on the porous particles described above, the dispersion mechanism 50 disperses the porous particles in the solution 20, and thereby it is possible to efficiently maintain the porous particles at an appropriate particle diameter. Further, since the carbon dioxide absorption module 101 includes the dispersion mechanism 50, it is easy to make the entire system including the solution 20 uniform so that the carbon dioxide absorber 10 can efficiently absorb carbon dioxide.

As the dispersion mechanism 50, a mechanism that generates a water flow in the solution 20 or the like may be used, and for example, an ultrasonic generator, a stirring device, or the like may be used (Fig. 1 illustrates an ultrasonic generator).

### (Solution Adjustment Mechanism)

The solution adjustment mechanism 60 supplies a basic substance to the solution 20 when the pH of the solution 20 is lowered. Examples of the basic substance include any salt described above and a solution in which the salt is dissolved. The lower limit of the pH of the solution 20 at which the solution adjustment mechanism 60 starts supplying the basic substance may be 5, 6, or 7. Due to the solution adjustment mechanism 60, it is easy to maintain the ratio of carbonate ions in the solution 20 at a further higher ratio. Therefore, the carbon dioxide absorption efficiency can be more efficiently maintained. The solution adjustment mechanism 60 may control the start and end of the supply of the basic substance based on information displayed by the display mechanism 90 which will be described hereinafter.

### (Display Mechanism)

When the activity of the carbon dioxide absorber 10 decreases, the display mechanism 90 displays a decrease in the activity. Since the carbon dioxide absorption module 101 includes such a display mechanism 90, it is easy to control the environment of the solution 20 so as to maintain the carbon dioxide absorption efficiency.

As described above, in the carbon dioxide absorption module 101, the pH of the solution 20 is correlated with the activity of the carbon dioxide absorber 10. Thus, the display mechanism 90 may include a pH indicator or a pH meter. More specifically, the display mechanism 90 may include a pH indicator to be supplied to the solution 20, or may include a pH meter configured to measure the pH of the solution 20. Since the pH of the solution 20 is indicated by a pH indicator or a pH meter, a decrease in the activity of the carbon dioxide absorber 10 can be indicated.

### [PH Indicator]

As a pH indicator, any indicator that can indicate a decrease in the activity of the carbon dioxide absorber 10 may be used, and as an indicator that can indicate a change in the pH around 6, bromocresol purple, bromothymol blue (BTB), phenol red, and neutral red may be used.

In the carbon dioxide absorption module 101, the dissolution rate of carbon dioxide in the solution 20 may be equal to or less than the carbonation rate of the carbon dioxide absorber 10. With this configuration, the carbon dioxide supplied from the supply unit 30 can be more reliably absorbed by the carbon dioxide absorber 10. From this viewpoint, the upper limit of a ratio of a content [ppm] of carbon dioxide in the gas released from the solution 20 (more specifically, the gas discharged from a discharge mechanism 103 to be described later) to a content [ppm] of carbon dioxide in the gas supplied from the supply unit 30 may be 0.8, 0.6, or 0.4. On the other hand, the lower limit of the ratio is not particularly limited, but may be, for example, 0.1. The ratio may be 0.1 or more and 0.8 or less, 0.1 or more and 0.6 or less, or 0.1 or more and 0.4 or less.

### <Carbon Dioxide Absorption Device>

The carbon dioxide absorption device 1 includes a carbon dioxide absorption module 101 and a storage tank 102 in which the solution 20 is stored. The carbon dioxide absorption device 1 further includes a discharge mechanism 103 that discharges the gas released from the solution 20. In the carbon dioxide absorption device 1, the carbon dioxide absorber 10 is immersed in the solution 20.

Since the carbon dioxide absorption device 1 includes the carbon dioxide absorption module 101 and the carbon dioxide absorber 10 is immersed in the solution 20, it is excellent in the carbon dioxide absorption efficiency.

### (Storage Tank)

The shape of the storage tank 102 is appropriately designed according to the shape of the carbon dioxide absorption module 101. The storage tank 102 is designed in such a manner that when the solution 20 is stored in the tank, the entire carbon dioxide absorption unit 70 is immersed in the solution 20.

### (Discharge Mechanism)

The discharge mechanism 103 is disposed above the storage tank 102. The discharge mechanism 103 discharges the gas, which rises in the solution 20 and is released from the liquid surface of the solution 20, out of the carbon dioxide absorption device 1.

### [Second Embodiment]

A carbon dioxide absorption module 201 illustrated in Fig. 5 includes a carbon dioxide absorber, a solution 20 that covers the carbon dioxide absorber, and a supply unit 230 that supplies carbon dioxide to the solution 20. As illustrated in Fig. 5, the carbon dioxide absorption module 201 is disposed in a carbon dioxide absorption tower 2.

In the carbon dioxide absorption module 201, the carbon dioxide absorber is covered by the solution 20 in which carbon dioxide is dissolved. Thereby, a part of the dissolved carbon dioxide is converted into carbonate ions. Thus, the carbon dioxide absorber can efficiently absorb carbonate ions dissolved in the solution 20. Therefore, the carbon dioxide absorption module 201 is excellent in carbon dioxide absorption efficiency.

The dimension of the carbon dioxide absorption module 201 and the carbon dioxide absorption tower 2 may be appropriately set according to the place of use and the purpose. Hereinafter, the carbon dioxide absorption module 201 and the carbon dioxide absorption tower 2 equipped with the carbon dioxide absorption module 201 will be described in detail.

### <Carbon Dioxide Absorption Module>

In the carbon dioxide absorption module 201, the carbon dioxide absorber is covered by the solution 20 in which carbon dioxide is dissolved, and thereby, carbonate ions generated in the solution 20 are absorbed by the carbon dioxide absorber. The carbon dioxide absorption module 201 includes a plurality of carbon dioxide absorbers. The carbon dioxide absorption module 201 further includes a storage unit 240 that stores the plurality of carbon dioxide absorbers, and a spray mechanism 250 that sprays the solution 20 onto the plurality of carbon dioxide absorbers.

### (Carbon Dioxide Absorber)

As the carbon dioxide absorber in the carbon dioxide absorption module 201, the same carbon dioxide absorber as the carbon dioxide absorber 10 in the first embodiment may be used. In the carbon dioxide absorption module 201, similar to the carbon dioxide absorber 10 in the first embodiment, the carbon dioxide absorber may be disposed on the support mediums 71a, 71b, or 71c. Similar to the first embodiment, the carbon dioxide absorption module 201 may include a plurality of support mediums 71a, 71b, or 71c. The plurality of support mediums 71a, 71b, or 71c may be spaced apart from each other, and similar to the first embodiment, a spacer may be disposed between the support mediums 71a, 71b, or 71c. In the carbon dioxide absorption module 201, the plurality of carbon dioxide absorbers, the plurality of support mediums, and the spacers constitute a carbon dioxide absorption unit as a whole.

### (Solution)

The solution 20 is sprayed by the spray mechanism 250 to continuously cover the plurality of carbon dioxide absorbers. As the solution 20 in the carbon dioxide absorption module 201, the same solution as the solution 20 in the first embodiment may be used. In other words, the solution 20 may include a dissolution promotor that promotes the dissolution of carbon dioxide into the solution 20, may include a pH buffer, or may include a salt that exhibits basicity in the solution 20.

### (Storage Unit)

The storage unit 240 is a container that stores the plurality of carbon dioxide absorbers. The storage unit 240 stores the entire carbon dioxide absorption unit. The storage unit 240 is provided with a plurality of openings through which the solution 20 passes. More specifically, the storage unit 240 is provided with a plurality of openings that serve as a flow path through which the solution 20, which is sprayed from above by the spray mechanism 250 and covers the plurality of carbon dioxide absorbers, passes through the plurality of carbon dioxide absorbers to flow out from below. Since the carbon dioxide absorption module 201 includes the storage unit 240, it is easy to supply the solution 20 and bring the solution into uniform contact the plurality of carbon dioxide absorbers stored at predetermined positions.

### (Spray Mechanism)

The spray mechanism 250 is disposed above the storage unit 240. The spray mechanism 250 sprays the solution 20 onto the storage unit 240 from above. The spray mechanism 250 is configured to uniformly spray the solution 20 onto the storage unit 240. In the carbon dioxide absorption module 201, the solution 20 is brought into uniform contact with the plurality of carbon dioxide absorbers by the spray mechanism 250, and thereby it is easy to improve the carbon dioxide absorption efficiency. The solution 20 sprayed by the spray mechanism 250 comes into contact with carbon dioxide which is supplied from the supply unit 230 and flows to a discharge mechanism 204 (to be described later) in the form of droplets having a large surface area. Therefore, it is easy to further improve the carbon dioxide absorption efficiency. In addition, according to the carbon dioxide absorption module 201, the solution 20 sprayed by the spray mechanism 250 does not stay in the storage unit 240. Therefore, it is easy to control the pH of the solution 20 appropriately.

### (Supply Unit)

The supply unit 230 supplies a gas that contains carbon dioxide to the storage unit 240. As illustrated in Fig. 5, the supply unit 230 is configured to supply a gas that contains carbon dioxide to the storage unit 240 from below. More specifically, the carbon dioxide absorption module 201 has a flow path through which the solution 20 sprayed by the spray mechanism 250 passes through the storage unit 240 and falls downward. The supply unit 230 supplies a gas that contains carbon dioxide into the flow path from a lower portion of the storage unit 240. The supply unit 230 is configured in such a manner that the carbon dioxide supplied into the flow path is dissolved in the solution 20 in the storage unit 240. The supply unit 230 may be configured to fill the flow path with carbon dioxide.

The supply unit 230 supplies a gas that contains carbon dioxide into the flow path. The lower limit of the partial pressure of carbon dioxide in the gas supplied from the supply unit 230 may be 0.005 MPa or 0.010 MPa from the viewpoint of dissolving carbon dioxide uniformly in the solution 20 sprayed by the spray mechanism 250. On the other hand, the upper limit of the partial pressure may be 0.99 MPa, for example, from the viewpoint of ease of handling the carbon dioxide absorption module 201. The partial pressure may be 0.005 MPa or more and 0.99 MPa or less, and may be 0.010 MPa or more and 0.99 MPa or less.

### <Carbon Dioxide Absorption Tower>

The carbon dioxide absorption tower 2 is a wet scrubber. The carbon dioxide absorption tower 2 includes the carbon dioxide absorption module 201. The carbon dioxide absorption tower 2 further includes a housing 203 in which the carbon dioxide absorption module 201 is disposed, a discharge mechanism 204 that discharges the gas in the housing 203, and a pump 205 that circulates the solution 20 flowing out from the storage unit 240 to the spray mechanism 250.

Since the carbon dioxide absorption tower 2 includes the carbon dioxide absorption module 201, it is excellent in the carbon dioxide absorption efficiency.

### (Housing)

The housing 203 includes a cylindrical section extending in the vertical direction and a storage section disposed below the cylindrical section. The cylindrical section has, for example, a cylindrical shape. The spray mechanism 250 is disposed inside the cylindrical section at an upper position. In addition, the storage unit 240 is disposed inside the cylindrical section at a position lower than the spray mechanism 250. The storage unit 240 is configured to block an internal space of the cylindrical section in the axial direction. The supply unit 230 is connected to a peripheral wall of the cylindrical section at a position lower than the storage unit 240. The region in the internal space of the cylindrical section below the spray mechanism 250 constitutes a flow path for the solution 20.

The storage section is continuous with a lower end of the cylindrical section. The storage section stores the solution 20 which is sprayed by the spray mechanism 250 and flows through the storage unit 240. The solution 20 stored in the storage section may have carbon dioxide dissolved therein.

A liquid supply mechanism 206 and a liquid drainage mechanism 207 are connected to the storage section. In order to adjust the pH of the solution 20 stored in the storage section, the liquid supply mechanism 206 may supply the solution 20 to the storage section, or the liquid drainage mechanism 207 may drain the solution 20 stored in the storage section to the outside. The liquid supply mechanism 206 may be configured as the solution adjustment mechanism described above. The display mechanism described above may be disposed in the storage section.

### (Discharge Mechanism)

The discharge mechanism 204 is disposed above the storage unit 240. The discharge mechanism 204 is disposed, for example, on the top of the cylindrical section.

### (Pump)

The pump 205 sucks up the solution 20 stored in the storage section and circulates the solution to the spray mechanism 250.

### [Third Embodiment]

### [Carbon Dioxide Absorption Method]

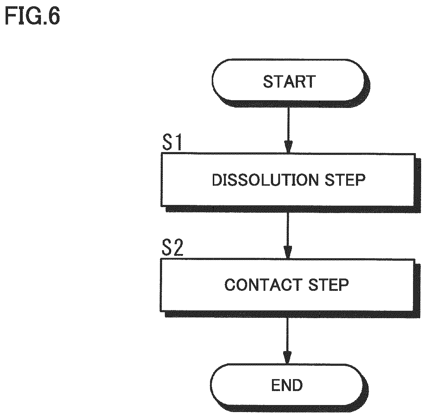

The carbon dioxide absorption method of Fig. 6 includes a step of bringing carbonate ions into contact with a carbon dioxide absorber covered by a solution (hereinafter also referred to as "contact step S2"). The carbon dioxide absorption method includes a step of dissolving carbon dioxide in the solution (hereinafter, also referred to as "dissolution step S1").

In the carbon dioxide absorption method, since the solution covers the carbon dioxide absorber, the carbonation of the carbon dioxide absorber is promoted. Therefore, according to the carbon dioxide absorption method, the carbon dioxide absorption efficiency is excellent.

The carbon dioxide absorption method may be performed by the carbon dioxide absorption module 101 or the carbon dioxide absorption module 201 described above. Hereinafter, the carbon dioxide absorption method will be described in detail.

### (Dissolution Step)

For example, when the carbon dioxide absorption module 101 described in the first embodiment is used, the dissolution step S1 is performed by supplying a gas that contains carbon dioxide from the supply unit 30 to the solution 20. When the carbon dioxide absorption module 201 described in the second embodiment is used, the dissolution step S1 is performed by supplying a gas that contains carbon dioxide from the supply unit 230 to the solution 20 sprayed by the spray mechanism 250.

In the dissolution step S1, the dissolution of carbon dioxide into the solution 20 may be promoted by the dissolution promotion mechanism 40 described above. In the dissolution step S1, the plurality of carbon dioxide absorbers 10 may be dispersed in the solution 20 by the dispersion mechanism 50. Further, in the dissolution step S1, a basic substance may be supplied to the solution 20 by the solution adjustment mechanism 60 described above, and a decrease in the activity of the carbon dioxide absorber may be displayed by the display mechanism 90 described above.

### (Contact Step)

In the contact step S2, carbonate ions are brought into contact with the carbon dioxide absorber to allow the carbon dioxide absorber to absorb the carbonate ions. In the contact step S2, for example, when the carbon dioxide absorption module 101 described in the first embodiment is used, carbonate ions generated in the solution 20 are brought into contact with the carbon dioxide absorber 10 immersed in the solution 20. In the contact step S2, when the carbon dioxide absorption module 201 described in the second embodiment is used, the carbonate ions are brought into contact with the plurality of carbon dioxide absorbers 10 by allowing the solution 20 that contains the carbonate ions to pass through the storage unit 240.

In the carbon dioxide absorption method, the dissolution step S1 and the contact step S2 are performed in this order as a procedure to allow one of the carbon dioxide absorbers described above to absorb carbonate ions. On the other hand, in the carbon dioxide absorption modules 101 and 201 described above, the dissolution step S1 and the contact step S2 can be performed in parallel. In this case, the dissolution rate of carbon dioxide in the solution 20 may be equal to or less than the carbonation rate of the carbon dioxide absorber 10.

The carbon dioxide absorption method may include a step (also referred to as a "recovery step") of recovering the carbon dioxide absorber that has absorbed carbonate ions after the contact step S2.

### [Other Embodiments]

It should be understood that the embodiments disclosed herein are illustrative and non-restrictive in all respects. The scope of the present invention is not limited to the configuration of the embodiments described above, but is defined by the scope of the claims, and is intended to encompass all modifications equivalent in meaning and scope to the claims.

The carbon dioxide absorption module may be disposed in a device other than the carbon dioxide absorption device and the carbon dioxide absorption tower described in the above embodiments.

The arrangement of the carbon dioxide absorbers is not limited to the configuration described in the above embodiments. For example, the carbon dioxide absorbers may not be disposed on the support medium. The carbon dioxide absorbers may be firstly disposed on the porous particles and then disposed on another support medium.

The solution may contain an emulsifier (surfactant). Since the solution contains an emulsifier and the emulsifier adsorbs to the carbon dioxide absorbers to form micelles, it is possible to prevent the carbon dioxide absorbers from aggregating, which makes it possible to efficiently maintain the carbon dioxide absorbers at an appropriate particle diameter.

The lower limit of an HLB value of the emulsifier may be 4 or 6 from the viewpoint of sufficiently preventing the carbon dioxide absorbers from aggregating. On the other hand, the upper limit of the HLB value of the emulsifier is not particularly limited, but may be, for example, 20. The HLB value of the emulsifier may be 4 or more and 20 or less, and may be 6 or more and 20 or less.

The lower limit of the absolute zeta potential of the micelles formed by the emulsifier may be 20 mV or 25 mV from the viewpoint of maintaining the stability of the micelles. On the other hand, the upper limit of the absolute zeta potential of the micelles is not particularly limited, but may be, for example, 40 mV. The absolute zeta potential of the micelles may be 20 mV or more and 40 mV or less, or 25 mV or more and 40 mV or less.

In the above embodiments, water is used as the solvent of the solution, but the present disclosure is not limited thereto. For example, an organic solvent may be used as the solvent.

One or both of the dissolution promotion mechanism and the promotion mechanism may be omitted when carbon dioxide can be properly absorbed by the carbon dioxide absorber. Further, the solution may not include one or both of the dissolution promoter and the pH buffer. Furthermore, the carbon dioxide absorption module may not include the display mechanism and the solution adjustment mechanism when, for example, a decrease in the activity of the carbon dioxide absorber can be prevented or a decrease in the activity can be predicted.

### [Examples]

Hereinafter, the present disclosure will be described in more detail with reference to the following examples, but the present disclosure is not limited to the following examples.

### [No.1]

A tray was placed on the bottom of a cubic reaction vessel, and 300 g of carbon dioxide absorber powder was placed on the tray. Magnesium oxide (manufactured by Tateho Chemical Industries Co., Ltd., product number: TATEHOMAG (registered trademark) #1100) was used as the carbon dioxide absorber.

300 g of the solution was supplied to the reaction vessel and allowed to stand still. The concentration of carbon dioxide (concentration of dissolved inorganic carbon) in the solution was 1.83×10⁻³ mol/L. At this time, although the carbon dioxide absorber powder contains the solution, the carbon dioxide absorber powder was not covered by the solution, and thereby, the liquid level of the solution could not be observed.

### [No.2]

A support medium, i.e., a piece of 8 cm square cloth was impregnated with 50 g of carbon dioxide absorber powder and 100 g of water. Magnesium oxide (manufactured by Tateho Chemical Industries Co., Ltd., product number: TATEHOMAG (registered trademark) #1100) was used as the carbon dioxide absorber. The cloth was then placed in a cubic reaction vessel.

A solution was supplied to the reaction vessel so that the cloth was completely immersed. The concentration of dissolved inorganic carbon in the solution was 1.73×10⁻³ mol/L. The reaction vessel was stirred with a bubbling device (manufactured by Marinetech Co., Ltd., product number: ASQ-50).

### <Evaluation>

For Example No. 1, the concentration of dissolved inorganic carbon in the solution was measured after 170 minutes, and the concentration of dissolved inorganic carbon in the solution was 6.63×10⁻⁵ mol/L. For Example No. 2, the concentration of dissolved inorganic carbon in the solution was measured after 178 minutes, and the concentration of dissolved inorganic carbon in the solution was 6.24×10⁻⁵ mol/L. Therefore, the change in the concentration of dissolved inorganic carbon per 1 kg of the carbon dioxide absorber was 3.45×10⁻⁵ mol/L·min for Example No. 1 and was 1.88×10⁻⁴mol/L·min for Example No. 2. The absorption rate of carbonate ions in Example No. 2 was estimated to be 5.45 times that in Example No. 1.

These results indicate that the carbon dioxide absorption efficiency was improved when the carbon dioxide absorber is covered by the solution.

### REFERENCE SIGNS LIST

1: carbon dioxide absorption device
2: carbon dioxide absorption tower
10: carbon dioxide absorber
20: solution
30, 230: supply unit
40: dissolution promotion mechanism
50: dispersion mechanism (ultrasonic generator)
60: solution adjustment mechanism
70: carbon dioxide absorption unit
71a, 71b, 71c: support medium
72: spacer
90: display mechanism (pH indicator or pH meter)
101, 201: carbon dioxide absorption module
102: storage tank
103, 204: discharge mechanism
203: housing
205: pump
206: liquid supply mechanism
207: liquid drainage mechanism
240: storage unit
250: spray mechanism

## Claims

1. A carbon dioxide absorption module comprising:
a carbon dioxide absorber;
a solution that covers the carbon dioxide absorber; and
a supply unit that supplies carbon dioxide to the solution.

2. The carbon dioxide absorption module according to claim 1, wherein
the carbon dioxide absorber is a layered double hydroxide, a basic metal oxide, or a basic metal hydroxide.

3. The carbon dioxide absorption module according to claim 1 or claim 2, further comprising:
a dissolution promotion mechanism that promotes dissolution of the carbon dioxide into the solution.

4. The carbon dioxide absorption module according to any one of claims 1 to 3, wherein
the solution contains a dissolution promotor that promotes dissolution of the carbon dioxide into the solution.

5. The carbon dioxide absorption module according to any one of claims 1 to 4, wherein
a dissolution rate of the carbon dioxide in the solution is equal to or less than a carbonation rate of the carbon dioxide absorber.

6. The carbon dioxide absorption module according to any one of claims 1 to 5, wherein
the carbon dioxide absorber includes a plurality of carbon dioxide absorbers, and
an average particle diameter of the plurality of carbon dioxide absorbers is 5 nm or more and 500 nm or less.

7. The carbon dioxide absorption module according to claim 6, further comprising:
a dispersion mechanism that disperses the plurality of carbon dioxide absorbers in the solution, and
the dispersion mechanism maintains the average particle diameter of the plurality of carbon dioxide absorbers at 5 nm or more and 500 nm or less.

8. The carbon dioxide absorption module according to any one of claims 1 to 7, wherein
the pH of the solution is greater than 6.

9. The carbon dioxide absorption module according to any one of claims 1 to 8, wherein
the solution contains a pH buffer.

10. The carbon dioxide absorption module according to any one of claims 1 to 9, further comprising:
a solution adjustment mechanism that supplies a basic substance to the solution.

11. The carbon dioxide absorption module according to any one of claims 1 to 10, further comprising:
a display mechanism that displays a decrease in an activity of the carbon dioxide absorber when the activity thereof decreases.

12. The carbon dioxide absorption module according to any one of claims 1 to 11, wherein
the carbon dioxide absorber includes a plurality of carbon dioxide absorbers, and
the carbon dioxide absorption module further includes a spray mechanism that sprays the solution onto the plurality of carbon dioxide absorbers.

13. The carbon dioxide absorption module according to claim 12, further comprising:
a storage unit that stores the plurality of carbon dioxide absorbers.

14. The carbon dioxide absorption module according to any one of claims 1 to 13, further comprising:
a porous support medium on which the carbon dioxide absorber is disposed.

15. The carbon dioxide absorption module according to claim 14, wherein
the support medium is a porous particle, and
the porous particle on which the carbon dioxide absorber is disposed has an average particle diameter of 10 mm or less.

16. The carbon dioxide absorption module according to claim 14, wherein
the support medium is a porous yarn or a porous sheet, and
the plurality of carbon dioxide absorbers are disposed on the support medium.

17. The carbon dioxide absorption module according to any one of claims 14 to 16, wherein
the support medium includes a plurality of support mediums, and
the plurality of support mediums are disposed with an interval from each other.

18. A carbon dioxide absorption tower comprising:
the carbon dioxide absorption module according to any one of claims 1 to 17.

19. A carbon dioxide absorption device comprising:
the carbon dioxide absorption module according to any one of claims 1 to 17; and
a storage tank that stores the solution,
wherein the carbon dioxide absorber is immersed in the solution.

20. A carbon dioxide absorption method comprising:
bringing carbonate ions into contact with a carbon dioxide absorber covered by a solution.
